(19) Europäisches Patentamt
European Patent Office
Office européen des brevets

(11) Veröffentlichungsnummer: **0 210 135 B1**

(12) **EUROPÄISCHE PATENTSCHRIFT**

(45) Veröffentlichungstag der Patentschrift: **25.11.92**

(51) Int. Cl.$^5$: **C09B 5/24**

(21) Anmeldenummer: **86810325.0**

(22) Anmeldetag: **18.07.86**

# (54) Verfahren zur Herstellung von Mischungen anthrachinoider Dispersionsfarbstoffe.

(30) Priorität: **24.07.85 CH 3223/85**

(43) Veröffentlichungstag der Anmeldung:
**28.01.87 Patentblatt 87/05**

(45) Bekanntmachung des Hinweises auf die Patenterteilung:
**25.11.92 Patentblatt 92/48**

(84) Benannte Vertragsstaaten:
**CH DE FR GB IT LI**

(56) Entgegenhaltungen:
**EP-A- 0 119 465**
**US-A- 2 753 356**

**CHEMICAL ABSTRACTS, Band 86, 1977, Seite 83, Zusammenfassung Nr. 56748t, Columbus, Ohio, US**

**PATENT ABSTRACTS OF JAPAN, Band 7, Nr. 181 (C-180)[1326], 10. August 1983**

(73) Patentinhaber: **CIBA-GEIGY AG**
**Klybeckstrasse 141**
**CH-4002 Basel(CH)**

(72) Erfinder: **Haspra, Pavel, Dr.**
**Waldshüterstrasse 23**
**CH-4310 Rheinfelden(CH)**
Erfinder: **Nicopoulos, Alex**
**Grellingerstrasse 13**
**CH-4052 Basel(CH)**

**EP 0 210 135 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft ein Verfahren zur Herstellung von Mischungen von 1,4-Diamino-2,3-dicarbonsäureimid-Farbstoffen, welche am Imid-Stickstoffatom substituiert sind, sowie von analogen Imino-Verbindungen.

1,4-Diaminoanthrachinon-2,3-dicarbonsäureimide, die am Imid-Stickstoffatom durch Alkoxyalkylgruppen substituiert sind, sind z.B. aus der US-A-2,753,356 bekannt. Sie werden durch Umsetzung von 1,4-Diaminoanthrachinon-2,3-dicarbonsäureimid mit den Alkoxyalkylaminen in organischen Lösungsmitteln erhalten. Gemäss EP-A-119 465 wurde gefunden, dass eine bestimmte Mischung aus zwei dieser Farbstoffe eine gegenüber den Einzelfarbstoffen erhöhte Dispersionsstabilität aufweist, die besonders gut zum Färben und Bedrucken von hydrophoben Fasermaterialien, insbesondere Polyestertextilien, geeignet ist. Diese Mischungen sind z.B. durch Umsetzung von 1,4-Diaminoanthrachinon-2,3-dicarbonsäure-imid mit einer Mischung aus den entsprechenden Aminen in einem Lösungsmittel erhältlich. Die EP-A-61039 beschreibt die Umsetzung von 1,4-Diaminoanthrachinon-2,3-dicarbonsäure-imid mit Aminen in Wasser.

Es wurde nun gefunden, dass man die Herstellung von Mischungen der obengenannten Farbstoffe, vorteilhaft durch Umsetzung der Imide mit den Aminen ohne Anwesenheit von Wasser oder Lösungsmittel durchführt.

Gegenstand der vorliegenden Erfindung ist somit ein Verfahren zur Herstellung von Mischungen, enthaltend mindestens zwei Farbstoffe der Formel

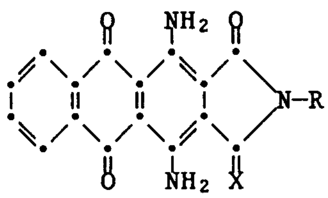

(1)

worin

X O oder NH und

R Alkyl, Alkylen-O-Alkyl, Alkylen-O-Alkylen-O-Alkyl oder Alkylen-O-Alkylen-O-Phenyl

bedeutet, dadurch gekennzeichnet, dass man eine Verbindung der Formel

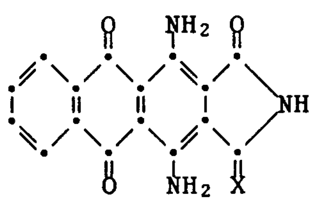

(2)

mit einem Amin der Formel $R\text{-}NH_2$ umsetzt, wobei X und R die oben angegebene Bedeutung aufweisen, und anschliessend den erhaltenen Farbstoff der Formel (1) durch Umsetzung mit einem Amin der Formel $R'\text{-}NH_2$, worin R' die für R angegebene Bedeutung haben kann, jedoch von R verschieden ist, teilweise umamidiert.

Unter Alkylgruppen sind unverzweigte, verzweigte oder cyclische Alkylgruppen zu verstehen, vorzugsweise solche mit 1 bis 10 C-Atomen, insbesondere mit 1 bis 4 C-Atomen. Geeignete Alkylgruppen sind z.B. Methyl, Ethyl, n-Propyl, iso-Propyl, n-, sec.- oder tert.-Butyl, n-Pentyl, Cyclohexyl oder n-Octyl.

Die Alkylengruppen können ebenfalls unverzweigt oder verzweigt sein. Vorzugsweise handelt es sich um Alkylengruppen mit 2 bis 4 C-Atomen, vor allem um die Ethylen- oder 1,3-Propylengruppe.

Vorzugsweise verwendet man das erfindungsgemässe Verfahren zur Herstellung von Farbstoffen der Formel (1), worin X 0 bedeutet.

Zweckmässig wird bei der ersten Stufe der Umsetzung ein Ueberschuss an Amin eingesetzt, das dann auch als Verdünnungsmittel fungiert. Beispielsweise kann das Amin in einem 3- bis 20-fachen, insbesondere 4- bis 10-fachen molaren Ueberschuss eingesetzt werden, bezogen auf das Imid.

Die Reaktionstemperatur kann in weiten Grenzen schwanken. Sie kann etwa im Bereich von 0 °C bis

Siedetemperatur des Amins, beispielsweise 20 bis 100 ° C, liegen. Zweckmässig wird bei Temperaturen von 20 - 80 ° C, z.B. 30 - 60 ° C, gearbeitet.

Das anfallende Produkt der Formel (1) kann ohne Isolierung in der nachstehend beschriebenen zweiten Stufe eingesetzt werden. Bevorzugt wird es jedoch isoliert. Es ist im jeweiligen Amin schwer löslich und kann daher leicht durch Filtration abgetrennt werden. Wird es nicht auf diese Weise isoliert, kann der Aminüberschuss zumindest teilweise durch Destillation entfernt und der Rückstand direkt in der zweiten Stufe eingesetzt werden.

Vorzugsweise wird die erste Stufe dieses Verfahrens, d.h. die Umsetzung des Imids der Formel (2) mit dem Amin, wie oben beschrieben ohne Lösungsmittel durchgeführt.

Die partielle Umamidierung (zweite Stufe) wird vorzugsweise in Gegenwart eines inerten Lösungs- oder Verdünnungsmittels durchgeführt. Sie kann aber auch ohne ein solches nur in Gegenwart eines Ueberschusses des für die Umamidierung eingesetzten Amins erfolgen.

Als Lösungs- bzw. Verdünnungsmittel kommen zum Beispiel in Frage: wasserunlösliche organische Lösungsmittel wie etwa aliphatische oder aromatische Kohlenwasserstoffe oder aliphatische oder aromatische Halogenkohlenwasserstoffe, z.B. Benzol, Mono-, Di- oder Trichlorbenzol(e), 1,1,1-Trichloräthan usw.; wasserlösliche organische Lösungsmittel wie etwa ein- oder mehrwertige Alkohole, z.B. Methanol, Aethanol, Propanol, Butanol, Glykol usw., vorzugsweise n-Butanol; ferner Wasser.

Bevorzugt führt man die zweite Stufe in einem aliphatischen Alkohol, Wasser oder in deren Mischungen durch. Besonders bevorzugt ist dabei n-Butanol, vor allem aber Wasser.

Die zweite Stufe wird zweckmässig bei erhöhter Temperatur durchgeführt, beispielsweise im Bereich von 50 bis 150 ° C, vor allem von 70 - 140 ° C. Besonders bevorzugt ist das Arbeiten in Wasser bei einer Temperatur von über 100 ° C, d.h. unter Druck.

In der zweiten Stufe kann das zur teilweisen Umamidierung verwendete Amin zwar in der für das gewünschte Mischungsverhältnis theoretisch errechneten Menge eingesetzt werden. Vorzugsweise wird jedoch auch in der zweiten Stufe ein Ueberschuss an Amin eingesetzt, auch wenn ein zusätzliches Lösungs- bzw. Verdünnungsmittel verwendet wird, wobei die Verwendung eines zusätzlichen Lösungs- bzw. Verdünnungsmittels besonders bevorzugt ist. So setzt man beispielsweise das zur partiellen Umamidierung verwendete Amin in der 2- bis 10-fachen, vorzugsweise 3- bis 5-fachen molaren Menge, bezogen auf den theoretischen Bedarf zur Erzielung des gewünschten Mischungsverhältnisses, ein. Das Mischungsverhältnis im gewünschten Endprodukt kann dann durch leicht variierbare Parameter eingestellt werden. Derartige Parameter sind: Reaktionstemperatur, Reaktionszeit und Lösungs- bzw. Verdünnungsmittelmenge. Mit der Erhöhung der Reaktionstemperatur oder/und Reaktionszeit steigt der Anteil an der in der zweiten Stufe durch die Umamidierung gebildeten Komponente proportional. Die Lösungs- bzw. Verdünnungsmittelmenge beeinflusst ebenfalls die Einstellung des Umamidierungsgleichgewichts, selbstverständlich auch die Menge des eingesetzten Amins. Das Mischungsverhältnis der gebildeten Komponenten kann während der Reaktion leicht durch geeignete analytische Methoden festgestellt werden. Auf diese Weise können empirisch die optimalen Parameter für jedes gewünschte Mischungsverhältnis ermittelt werden.

Das gesamte Verfahren wird vorteilhaft als "batch"-Verfahren durchgeführt. Unter Verwendung von entsprechenden Apparaturen ist jedoch auch eine kontinuierliche Verfahrensführung möglich.

Das erfindungsgemässe Verfahren ist besonders geeignet zur Herstellung einer Farbstoffmischung aus 1 Teil der Verbindung der Formel

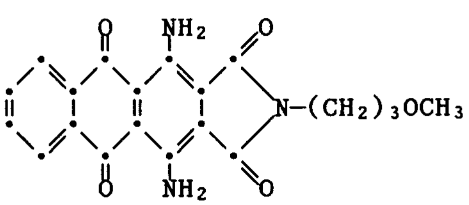

(3)

und 0,1-5 Teilen der Verbindung der Formel

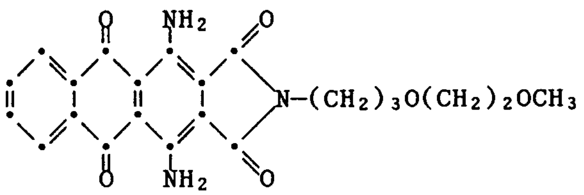

(4)

aus 1,4-Diaminoanthrachinon-2,3-dicarbonsäureimid, 3-Methoxypropylamin und 3-(2-Methoxyäthoxy)-propylamin. Diese bevorzugte Ausführungsform ist dadurch gekennzeichnet, dass man 1,4-Diaminoanthrachinon-2,3-dicarbonsäure-imid ohne Lösungsmittel mit 3-Methoxypropylamin oder 3-(2-Methoxyäthoxy)-propylamin zu 1,4-Diaminoanthrachinon-2,3-dicarbonsäure-N-(3-methoxypropyl)-imid oder 1,4-Diaminoanthrachinon-2,3-dicarbonsäure-N-[3-(2-methoxyäthoxy)-propyl]-imid umsetzt und das so erhaltene N-substituierte Imid mit 3-(2-Methoxyäthoxy)-propylamin bzw. 3-Methoxypropylamin zu der gewünschten Mischung teilweise umamidiert.

1,4-Diaminoanthrachinon-2,3-dicarbonsäure-imid kann also in einer ersten Stufe entweder mit 3-Methoxypropylamin oder mit 3-(2-Methoxyäthoxy)-propylamin umgesetzt werden, worauf entweder eine Verbindung der Formel (3) oder (4) entsteht, welche dann in der zweiten Stufe mit dem anderen Amin partiell umamidiert wird. Man erhält nach beiden Varianten ähnliche Resultate. Bevorzugt wird jedoch das Imid in der ersten Stufe mit 3-Methoxypropylamin zur Verbindung der Formel (3) umgesetzt und letztere mit 3-(2-Methoxyäthoxy)-propylamin zu der gewünschten Mischung teilweise umamidiert.

Wie aus der EP-A-119 465 hervorgeht, haben Mischungen der Farbstoffe (3) und (4) besonders gute Eigenschaften (z.B. Dispersionsstabilität), wenn sie in Form von Mischkristallen vorliegen. Diese werden insbesondere bei höheren Temperaturen gebildet. Wird dabei die zweite Stufe des erfindungsgemässen Verfahrens bei höheren Temperaturen durchgeführt, erhält man die erfindungsgemässen Mischungen direkt in der in der EP-A-119- 465 beschriebenen dispersionsstabilen Mischkristallform. Daher wird die zweite Stufe besonders vorteilhaft unter Druck bei Temperaturen über 100 ° C, beispielsweise bei 100 - 150 ° C, vorzugsweise 110 - 130 ° C durchgeführt. Somit betrifft das erfindungsgemässe Verfahren vorzugsweise die Herstellung von Farbstoffmischungen aus den Farbstoffen der Formel (3) und (4) in Mischkristallform mit den in der EP-A-119 465 angegebenen Spezifikation (siehe die dort angegebenen Röntgenbeugungsdiagramme).

Um die bevorzugte Mischkristallform zu erhalten, kann das erfindungsgemässe Verfahren jedoch auch bei tieferen Temperaturen, z.B. unter 100 ° C, und die Umwandlung in die genannte Kristallform nachträglich durchgeführt werden.

Zu diesem Zweck kann die erhaltene Mischung, die bei einer Temperatur unter 100 ° C hergestellt wurde, anschliessend auf Temperaturen über 100 ° C, z.B. 105 - 150 ° C, vor allem 110 - 130 ° C erhitzt werden. Dies kann beispielsweise in einem Lösungs- oder Verdünnungsmittel (z.B. in einem der oben angegebenen), vorzugsweise in Wasser erfolgen. Alternativ kann die erwünschte Kristallform auch durch Umkristallisation erreicht werden, wie in EP-A-119 465 beschrieben.

Das bevorzugte Mischungsverhältnis der Farbstoffe (3):(4) liegt im Bereich von 1:3 bis 3:1, d.h. etwa auf 1 Teil Farbstoff der Formel (3) enhält die Mischung 0,33-3 Teile des Farbstoffes der Formel (4). Insbesondere enthalten die erfindungsgemäss herstellbaren Mischungen auf 1 Teil des Farbstoffes der Formel (3) 0,5 - 2, vor allem 0,6 - 1,5 Teile des Farbstoffes der Formel (4).

Das überschüssige Amin kann in beiden Stufen recycliert werden. In der ersten Stufe kann nach dem Abfiltrieren des Zwischenproduktes das Amin wieder direkt eingesetzt werden, gegebenenfalls nach Ergänzung mit frischem Amin. In der zweiten Stufe kann entweder das Lösungs(Verdünnungs)mittel/Amin-Gemisch in einem weiteren Ansatz wiederverwendet oder das Lösungsmittel (z.B. Wasser) durch Destillation abgetrennt und das reine Amin wiederverwendet werden.

Die erfindungsgemässen hergestellten Farbstoffmischungen können zum Färben von hydrophoben Fasern wie synthetischen linearen Polyestern, z.B. Polyäthylenglykolterephthalat oder chemisch analog aufgebauten Polymeren sowie von halbsynthetischen Fasermaterialien wie z.B. Cellulosetriacetat, verwendet werden. Nähere Angaben bezüglich der Verwendung der genannten Farbstoffmischungen, enthaltend die Farbstoffe der Formeln (3) und (4), finden sich in der EP-A-119 465. Die darin beschriebene dispersionsstabile Mischkristallform, die durch das erfindungsgemässe Verfahren besonders vorteilhaft erhältlich ist, ist besonders geeignet zum Färben von Polyestertextilien in Hochtemperaturfärbeverfahren, z.B. im Bereich von 100 - 140 ° C.

Das erfindungsgemässe Verfahren weist eine Reihe von Vorteilen auf, verglichen mit bisher bekannten

Verfahrensvarianten. So werden die Farbstoffmischungen in sowohl analytisch als auch färberisch äusserst reiner Form in ausgezeichneter Ausbeute erhalten. Die erhaltenen Mischungen sind ausserordentlich stabil, insbesondere dispersionsstabil. Das Verfahren liefert kaum Abfälle, da die eingesetzten Ausgangsprodukte (Amine) weitgehend recyclierbar sind.

Die nachfolgenden Beispiele veranschaulichen das erfindungsgemässe Verfahren weiter. In der gesamten Beschreibung beziehen sich Prozente und Teile auf das Gewicht, sofern nichts anderes angegeben ist.

Beispiel 1:

a) In einem 750 ml Sulfierkolben werden 225,2 g 3-Methoxypropylamin vorgelegt und auf 40 ° C erhitzt. Innerhalb von 3 Stunden werden dann unter Rühren 141,2 g 1,4-Diaminoanthrachinon-2,3-dicarbonsäureimid eingetragen. Die Reaktion verläuft unter $NH_3$-Entwicklung leicht exotherm. Die dickflüssige Suspension wird noch eine Stunde bei 40 - 45 ° C gerührt, dann auf 20 ° C abgekühlt und eine weitere Stunde gerührt. Das ausgefallene Produkt wird abgenutscht, mit 300 ml Methanol und danach mit 300 ml Wasser gewaschen. Man erhält so 226,6 g 1,4-Diaminoanthrachinon-2,3-dicarbonsäure-N-(3-methoxypropyl)-imid (Farbstoff der Formel (3)). Die Mutterlauge kann, gegebenenfalls nach Ergänzung mit frischem 3-Methoxypropylamin, in einem neuen Ansatz wiederverwendet werden.

b) In einem Laborautoklaven werden 300 ml Wasser, 70,5 g 3-(2-Methoxy-äthoxy)-propylamin und 169,2 g des gemäss a) erhaltenen Produkts (Verbindung der Formel (3)) vorgelegt. Bei offenem Autoklaven wird auf 90 ° C erwärmt. Danach wird der Autoklav geschlossen und die Suspension unter Rühren auf 120 ° C erhitzt, wobei sich ein Druck von 1,2 - 1,3 bar einstellt. Bei dieser Temperatur wird 2 Stunden weitergerührt, danach auf 20 ° C abgekühlt und bei dieser Temperatur noch eine Stunde gerührt. Das ausgefallene Produkt wird abfiltriert, mit 300 ml Methanol und dann mit 1000 ml Wasser gewaschen. Dieses Produkt besteht aus 139,5 g einer Mischung aus den Verbindungen der Formeln (3) und (4) mit einem Gehalt von 60,9 % an 1,4-Diaminoanthrachinon-2,3-dicarbonsäure-N-(3-methoxypropyl)-imid und 36,4 % an 1,4-Diaminoanthrachinon-2,3-dicarbonsäure-N-[3-(2-methoxy-äthoxy)propyl]-imid.

Beispiel 2:

a) In einem 750 ml Sulfierkolben mit Blattrührer werden 477,2 g 3-(2-Methoxy-äthoxy)-propylamin vorgelegt und auf 40 ° C erhitzt. Innerhalb von 1 $\frac{1}{4}$ Stunden werden unter Rühren 141,2 g 1,4-Diaminoanthrachinon-2,3-dicarbonsäure-imid eingetragen. Die Reaktion verläuft unter $NH_3$-Entwicklung leicht exotherm. Danach wird auf 40 ° C erhitzt und bei dieser Temperatur noch 2 Stunden weitergerührt. Die Suspension wird dann auf 20 ° C abgekühlt, noch eine weitere Stunde gerührt und anschliessend abgenutscht. Das Nutschgut wird mit 300 ml Methanol und danach mit 300 ml Wasser gewaschen. Man erhält so 246,3 g 1,4-Diaminoanthrachinon-2,3-dicarbonsäure-N-[3-(2-methoxy-äthoxy)-propyl]-imid mit einem Trockengehalt von 74,7 %, entsprechend 180,1 g dieser Verbindung (100 %). Die Mutterlauge kann, gegebenenfalls nach Ergänzung mit frischem 3-(2-Methoxy-äthoxy)-propylamin, mehrmals wiederverwendet werden.

b) In einem Laborautoklaven werden 110 ml Wasser, 46,7 g 3-Methoxy-propylamin und 148,1 g des gemäss a) erhaltenen Produkts (Verbindung der Formel (4)) vorgelegt. Bei offenem Autoklaven wird auf 90 ° C erwärmt. Danach wird der Autoklav geschlossen und die Suspension unter Rühren auf 120 ° C erhitzt, wobei sich ein Druck von 1,2 - 1,3 bar einstellt. Bei dieser Temperatur wird 2 Stunden weitergerührt, danach auf 20 ° C abgekühlt und bei dieser Temperatur noch eine Stunde gerührt. Das ausgefallene Produkt wird abfiltriert, mit 300 ml Methanol und dann mit 1000 ml Wasser gewaschen. Dieses Produkt besteht aus 136,1 g einer Mischung aus den Verbindungen der Formeln (3) und (4) mit einem Gehalt von 56,7 % an 1,4-Diaminoanthrachinon-2,3-dicarbonsäure-N-(3-methoxypropyl)-imid und 42,2 % an 1,4-Diaminoanthrachinon-2,3-dicarbonsäure-N-[3-(2-methoxy-äthoxy)propyl]-imid.

Beispiel 3:

In einem 750 ml Sulfierkolben mit Blattrührer werden 310 ml n-Butanol, 27.9 g 3-(2-Methoxy-äthoxy)-propylamin und 132,7 g gemäss Beispiel 1a) erhaltenes 1,4-Diaminoanthrachinon-2,3-dicarbonsäure-N-(3-methoxypropyl)-imid vorgelegt. Innerhalb einer Stunde wird auf Rückflusstemperatur erhitzt und 20 Stunden gerührt. Nach Abkühlung auf 20 ° C wird eine weitere Stunde gerührt, dann abgenutscht und das Nutschgut mit 500 ml n-Butanol und dann 2000 ml Wasser gewaschen. Man erhält so 138.2 g einer Mischung aus den Verbindungen der Formeln (3) und (4) mit einem Gehalt von 75,9 % an 1,4-Diaminoanthrachinon-2,3-dicarbonsäure-N-(3-methoxypropyl)-imid und 21,9 % an 1,4-Diaminoanthrachinon-2,3-dicarbonsäure-N-[3-(2-methoxoyäthoxy)-propyl]-imid.

Beispiel 4:

In einem 750 ml Sulfierkolben mit Blattrührer werden 135 ml Wasser, 93.1 g 3-(2-Methoxy-äthoxy)-propylamin und 132,7 g gemäss Beispiel 1a) erhaltenes 1,4-Diaminoanthrachinon-2,3-dicarbonsäure-N-(3-methoxypropyl)-imid vorgelegt. Es wird auf Rückflusstemperatur erhitzt und 4 Stunden gerührt. Nach Abkühlung auf 20 ° C wird eine weitere Stunde gerührt, dann abgenutscht und das Nutschgut mit 300 ml Methanol und dann 1000 ml Wasser gewaschen. Man erhält so 138.6 g einer Mischung aus den Verbindungen der Formeln (3) und (4) mit einem Gehalt von 59,5 % an 1,4-Diaminoanthrachinon-2,3-dicarbonsäure-N-(3-methoxypropyl)-imid und 38,1 % an 1,4-Diaminoanthrachinon-2,3-dicarbonsäure-N-[3-(2-methoxyäthoxy)-propyl]-imid.

Auch in den Beispielen 3 und 4 kann 1,4-Diaminoanthrachinon-2,3-dicarbonsäure-imid zuerst mit 3-(2-Methoxy-äthoxy)-propylamin umgesetzt und die resultierende Verbindung der Formel (4) mit 3-Methoxypropylamin zu der gewünschten Mischung teilweise umamidiert werden.

Beispiele 5 - 8

Weitere analog Beispiel 1a herstellbare Farbstoffe der allgemeinen Formel

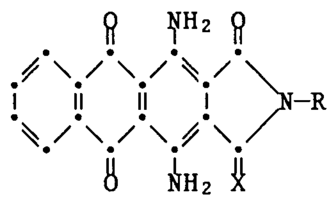

sind in der folgenden Tabelle aufgeführt.

| Bsp. | X | R | Nuance auf Polyester |
|---|---|---|---|
| 5 | O | $-nC_4H_9$ | blau |
| 6 | O | $-nC_8H_{17}$ | blau |
| 7 | NH | $-C_2H_4-O-C_4H_9$ | blau |
| 8 | O | $-C_3H_6-O-C_2H_4-O-$ 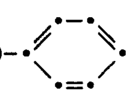 | blau |

Beispiele 9 - 11

Arbeitet man wie im Beispiel 1a und b beschrieben, und setzt in der ersten Stufe ein Amin der Formel $R-NH_2$ und in der zweiten Stufe ein Amin der Formel $R'-NH_2$ ein, so erhält man Farbstoffmischungen, bestehend aus den Farbstoffen der Formeln

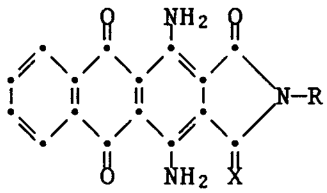

und

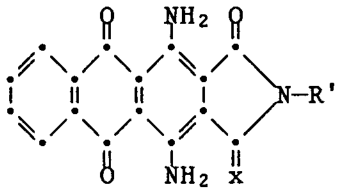

| Bsp. | X | R | R' | Nuance auf Polyester |
|---|---|---|---|---|
| 9 | O | $-(CH_2)_3-O-CH_3$ | $CH_3$<br>$-(CH_2)_3-O-CH$<br>$CH_3$ | blau |
| 10 | O | $-(CH_2)_3-O-CH_3$ | Mischung aus<br>$-(CH_2)_3-O-C_2H_5$<br>und $CH_3$<br>$-(CH_2)_3-O-CH$<br>$CH_3$ | blau |
| 11 | NH | $-(CH_2)_3-O-C_2H_5$ | $-(CH_2)_3-O-C_4H_9$ | blau |

## Patentansprüche

1. Verfahren zur Herstellung von Mischungen, enthaltend mindestens zwei Farbstoffe der Formel

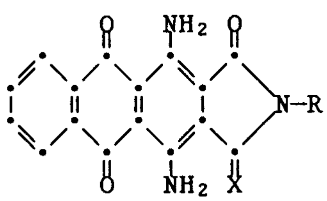

(1)

worin

X O oder NH und

R Alkyl, Alkylen-O-Alkyl, Alkylen-O-Alkylen-O-Alkyl oder Alkylen-O-Alkylen-O-Phenyl

bedeutet, dadurch gekennzeichnet, dass man eine Verbindung der Formel

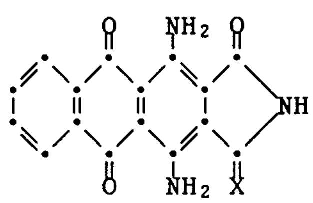

(2)

mit einem Amin der Formel $R-NH_2$ umsetzt, wobei X und R die oben angegebene Bedeutung aufweisen, und anschliessend den erhaltenen Farbstoff der Formel (1) durch Umsetzung mit einem Amin der Formel $R'-NH_2$, worin R' die für R angegebenen Bedeutungen haben kann, jedoch von R verschieden ist, teilweise umamidiert.

2. Verfahren gemäss Anspruch 1, dadurch gekennzeichnet, dass man die erste Stufe der Umsetzung mit einem 3- bis 20-fachen molaren Ueberschuss an Amin durchführt.

3. Verfahren gemäss Anspruch 2, dadurch gekennzeichnet, dass man die Umsetzung mit einem 4- bis 10-fachen molaren Ueberschuss an Amin durchführt.

4. Verfahren gemäss einem der Ansprüche 1 - 3, dadurch gekennzeichnet, dass man eine Verbindung der Formel (2) einsetzt, worin X O bedeutet.

5. Verfahren gemäss einem der Ansprüche 1 bis 4, dadurch gekennzeichnet, dass man die Umsetzung in der ersten Stufe ohne Lösungsmittel durchführt.

6. Verfahren gemäss Anspruch 1, dadurch gekennzeichnet, dass man die zweite Stufe in einem Lösungs- bzw. Verdünnungsmittel, vorzugsweise in einem aliphatischen Alkohol, in Wasser oder in Mischungen dieser Lösungsmittel durchführt.

7. Verfahren nach Anspruch 6, dadurch gekennzeichnet, dass man Wasser als Lösungsmittel einsetzt.

8. Verfahren nach einem der Ansprüche 1, 4, 6 und 7, dadurch gekennzeichnet, dass man die teilweise Umamidierung bei einer Temperatur von 50 - 150 ° C vorzugsweise von 70 bis 140 ° C durchführt.

9. Verfahren gemäss einem der Ansprüche 1 bis 8, dadurch gekennzeichnet, dass man Amine R-$NH_2$ und R'-$NH_2$ einsetzt, worin R und R' voneinander verschieden sind und je Alkyl, Alkylen-O-Alkyl, Alkylen-O-Alkylen-O-Alkyl oder Alkylen-O-Alkylen-O-Phenyl bedeuten, wobei die Alkylgruppen 1 bis 10 C-Atome und die Alkylengruppen 2 bis 4 C-Atome aufweisen.

10. Verfahren gemäss Anspruch 9, dadurch gekennzeichnet, dass man Amine R-$NH_2$ und R'-$NH_2$ einsetzt, worin R und R' voneinander verschieden sind und je Alkyl, Alkylen-O-Alkyl, Alkylen-O-Alkylen-O-Alkyl oder Alkylen-O-Alkylen-O-Phenyl bedeuten, wobei die Alkylgruppen 1 bis 4-C-Atome und die Alkylengruppen 2 oder 3 C-Atome aufweisen.

11. Verfahren gemäss einem der Ansprüche 1 - 10, dadurch gekennzeichnet, dass man in der ersten Stufe das Amin R-$NH_2$ in 3 bis 20 fachem, vorzugsweise 4 bis 10 fachem molarem Ueberschuss und in der zweiten Stufe in 2 bis 10 fachem, vorzugsweise 3 bis 5 fachem molarem Ueberschuss einsetzt.

12. Verfahren gemäss Anspruch 1 zur Herstellung einer Farbstoffmischung aus 1 Teil der Verbindung der Formel

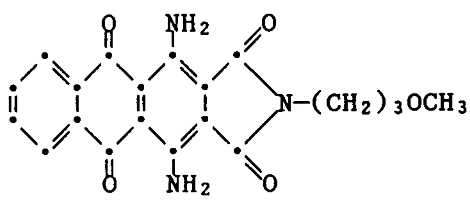

(3)

und 0,1 - 5 Teilen der Verbindung der Formel

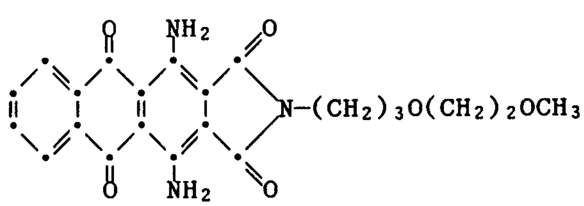

(4)

aus 1,4-Diaminoanthrachinon-2,3-dicarbonsäureimid, 3-Methoxypropylamin und 3-(2-Methoxyäthoxy)-propylamin dadurch gekennzeichnet, dass man 1,4-Diaminoanthrachinon-2,3-dicarbonsäure-imid ohne Lösungsmittel mit 3-Methoxypropylamin oder 3-(2-Methoxyäthoxy)-propylamin zu 1,4-Diaminoanthrachinon-2,3-dicarbonsäure-N-(3-methoxypropyl)-imid oder 1,4-Diaminoanthrachinon-2,3-dicarbonsäure-N-[3-(2-methoxyäthoxy)-propyl]-imid umsetzt und das so erhaltene N-substituierte Imid mit 3-(2-Methoxyäthoxy)-propylamin bzw. 3-Methoxypropylamin zu der gewünschten Mischung teilweise umamidiert.

**13.** Verfahren nach Anspruch 12, worin man die nach der Umamidierung erhaltene Mischung auf Temperaturen über 100 °C erhitzt.

**14.** Verfahren nach Anspruch 13, worin man die erhaltene Mischung in Wasser auf 110 - 150 °C erhitzt.

**15.** Verfahren nach einem der Ansprüche 1 bis 14, worin man die Zusammensetzung der Farbstoffmischung durch Variation von Reaktionstemperatur, Reaktionszeit oder/und Lösungs(Verdünnungs)-mittelmenge in der zweiten Stufe steuert.

**Claims**

**1.** A process for the preparation of a mixture containing at least two dyes of formula

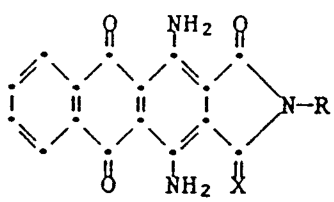

(1)

wherein
X is O or NH and
R is alkyl, alkylene-O-alkyl, alkylene-O-alkylene-O-alkyl or alkylene-O-alkylene-O-phenyl,
which process comprises reacting a compound of formula

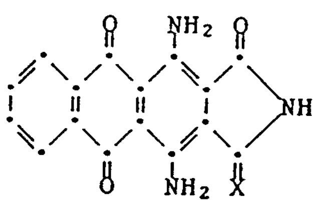

(2)

with an amine of formula $R\text{-}NH_2$, wherein X and R are as defined above, and subsequently partially transamidating the resultant dye of formula (1) by reaction with an amine of formula $R'\text{-}NH_2$, wherein R' can be as defined for R but is different from R.

**2.** A process according to claim 1, wherein the first step of the reaction is carried out with a 3- to 20-fold molar excess of amine.

**3.** A process according to claim 2, wherein the reaction is carried out with a 4- to 10-fold molar excess of amine.

**4.** A process according to any one of claims 1 to 3, which comprises using a compound of formula (2), wherein X is O.

**5.** A process according to any one of claims 1 to 4, which comprises carrying out the reaction in the first

step without a solvent.

**6.** A process according to claim 1, wherein the second step is carried out in a solvent or diluent, preferably in an aliphatic alcohol, in water, or in a mixture of said solvents.

**7.** A process according to claim 6, wherein the solvent used is water.

**8.** A process according to any one of claims 1, 4, 6 and 7, wherein the partial transamidation is carried out at a temperature from 50-150 ° C, preferably from 70 to 140 ° C.

**9.** A process according to any one of claims 1 to 8, which comprises the use of amines $R\text{-}NH_2$ and $R'\text{-}NH_2$, wherein R and R' are different and are each alkyl, alkylene-O-alkyl, alkylene-O-alkylene-O-alkyl or alkylene-O-alkylene-O-phenyl, the alkyl groups containing 1 to 10 carbon atoms and the alkylene groups containing 2 to 4 carbon atoms.

**10.** A process according to claim 9, which comprises the use of amines $R\text{-}NH_2$ and $R'\text{-}NH_2$, wherein R and R' are different and are each alkyl, alkylene-O-alkyl, alkylene-O-alkylene-O-alkyl or alkylene-O-alkylene-O-phenyl, the alkyl groups containing 1 to 4 carbon atoms and the alkylene groups containing 2 or 3 carbon atoms.

**11.** A process according to any one of claims 1 to 10, wherein the amine $R\text{-}NH_2$ is employed in a 3- to 20-fold, preferably 4- to 10-fold, molar excess in the first step, and in a 2- to 10-fold, preferably 3- to 5-fold, molar excess in the second step.

**12.** A process according to claim 1 for the preparation of a dye mixture comprising 1 part of the compound of formula

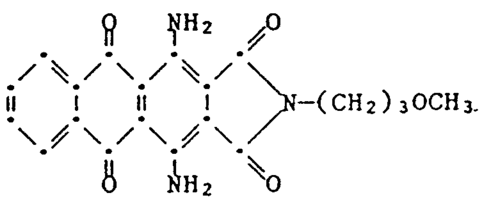

(3)

and 0.1 to 5 parts of the compound of formula

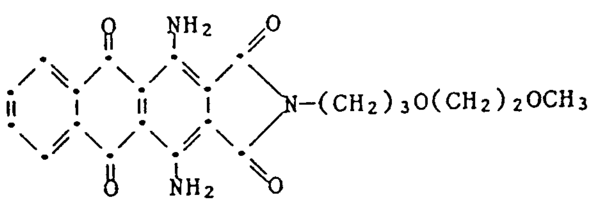

(4)

from 1,4-diaminoanthraquinone-2,3-dicarboximide, 3-methoxypropylamine and 3-(2-methoxyethoxy)-propylamine, which process comprises reacting 1,4-diaminoanthraquinone-2,3-dicarboximide, without a solvent, with 3-methoxypropylamine or 3-(2-methoxyethoxy)propylamine to give N-(3-methoxypropyl)-1,4-diaminoanthraquinone-2,3-dicarboximide or N-[3-(2-methoxyethoxy)propyl]-1,4-diaminoanthraquinone-2,3-dicarboximide, and partially transamidating the resultant N-substituted imide with 3-(2-methoxyethoxy)propylamine or 3-methoxypropylamine to give the desired mixture.

**13.** A process according to claim 12, which comprises heating the mixture obtained after transamidation to temperatures above 100 ° C.

**14.** A process according to claim 13, which comprises heating the resultant mixture in water to 110-150 ° C.

**15.** A process according to any one of claims 1 to 14, wherein the composition of the dye mixture is controlled by varying the reaction temperature, reaction time and/or the amount of solvent and/or diluent in the second step.

## Revendications

**1.** Procédé de préparation de mélanges renfermant au moins deux colorants de formule :

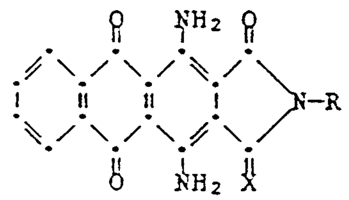

(1)

dans laquelle X représente un atome d'oxygène ou un groupe NH et R représente un groupe alkyle, alkylène-O-alkyle, alkylène-O-alkylène-O-alkyle ou alkylène-O-alkylène-O-phényle, caractérisé en ce que l'on fait réagir un composé de formule :

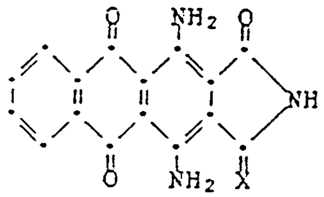

(2)

avec une amine de formule $R\text{-}NH_2$, X et R ayant les significations indiquées précédemment, et soumet ensuite le colorant de formule (1) obtenu à une transamidation partielle, en le faisant réagir avec une amine de formule $R'\text{-}NH_2$, dans laquelle R' peut avoir les significations indiquées pour R, mais est différent de R.

**2.** Procédé selon la revendication 1, caractérisé en ce que l'on réalise la première étape de la réaction avec un excès 3 à 20 fois molaire en amine.

**3.** Procédé selon la revendication 2, caractérisé en ce que l'on réalise la réaction avec un excès 4 à 10 fois molaire en amine.

**4.** Procédé selon l'une quelconque des revendications 1 à 3, caractérisé en ce que l'on utilise un composé de formule (2), dans laquelle X représente un atome d'oxygène.

**5.** Procédé selon l'une quelconque des revendications 1 à 4, caractérisé en ce que l'on réalise la réaction, dans la première étape, sans solvant.

**6.** Procédé selon la revendication 1, caractérisé en ce que l'on réalise la deuxième étape dans un solvant ou diluant, de préférence dans un alcool aliphatique, dans l'eau ou dans un mélange de ces solvants.

**7.** Procédé selon la revendication 6, caractérisé en ce que l'on utilise l'eau comme solvant.

**8.** Procédé selon l'une quelconque des revendications 1, 4, 6 et 7, caractérisé en ce que l'on réalise la transamidation partielle à une température de 50 à 150 °C, de préférence à une température de 70 à 140 °C.

**9.** Procédé selon l'une quelconque des revendications 1 à 8, caractérisé en ce que l'on utilise des amines $R\text{-}NH_2$ et $R'\text{-}NH_2$, dans lesquelles R et R' sont différents l'un de l'autre et représentent chacun un groupe alkyle, alkylène-O-alkyle, alkylène-O-alkylène-O-alkyle ou alkylène-O-alkylène-O-phényle, les

groupes alkyle ayant 1 à 10 atomes de carbone et les groupes alkylène ayant 2 à 4 atomes de carbone.

**10.** Procédé selon la revendication 9, caractérisé en ce que l'on utilise des amines $R-NH_2$ et $R'-NH_2$, dans lesquelles R et R' sont différents l'un de l'autre et représentent chacun un groupe alkyle, alkylène-O-alkyle, alkylène-O-alkylène-O-alkyle ou alkylène-O-alkylène-O-phényle, les groupes alkyle ayant 1 à 4 atomes de carbone et les groupes alkylène ayant 2 ou 3 atomes de carbone.

**11.** Procédé selon l'une quelconque des revendications 1 à 10, caractérisé en ce que, dans la première étape, on utilise l'amine $R-NH_2$ en un excès 3 à 20 fois molaire, de préférence 4 à 10 fois molaire, et, dans la deuxième étape, on utilise l'amine $R'-NH_2$ en un excès 2 à 10 fois molaire, de préférence 3 à 5 fois molaire.

**12.** Procédé selon la revendication 1, pour la préparation d'un mélange de colorants renfermant une partie du composé de formule :

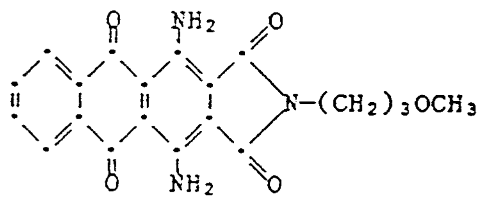

(3)

et 0,1 à 5 parties du composé de formule :

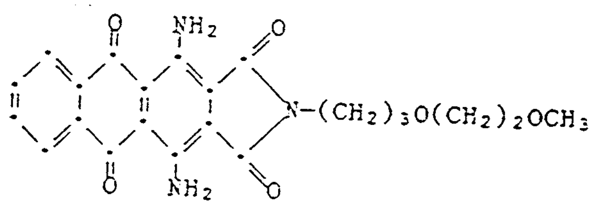

(4)

à partir d'imide de l'acide 1,4-diaminoanthraquinone-2,3-dicarboxylique, de 3-méthoxypropylamine et de 3-(2-méthoxyéthoxy)-propylamine, caractérisé en ce que l'on fait réagir, sans solvant, l'imide de l'acide 1,4-diaminoanthraquinone-2,3-dicarboxylique avec de la 3-méthoxypropylamine ou avec de la 3-(2-méthoxyéthoxy)-propylamine pour obtenir le N-(3-méthoxypropyl)-imide de l'acide 1,4-diaminoanthraquinone-2,3-dicarboxylique ou le N-[3-(2-méthoxyéthoxy)propyl]-imide de l'acide 1,4-diaminoanthraquinone-2,3-dicarboxylique, et soumet l'imide N-substitué ainsi obtenu à une transamidation partielle, en le faisant réagir avec la 3-(2-méthoxy-éthoxy)-propylamine ou avec la 3-méthoxypropylamine, pour obtenir le mélange souhaité.

**13.** Procédé selon la revendication 12, dans lequel on chauffe le mélange obtenu après la transamidation à une température supérieure à 100 °C.

**14.** Procédé selon la revendication 13, dans lequel on chauffe le mélange obtenu, dans l'eau, à une température de 110 à 150 °C.

**15.** Procédé selon l'une quelconque des revendications 1 à 14, dans lequel on règle la composition du mélange de colorants en faisant varier la température de réaction, la durée de réaction et/ou la quantité de solvant (diluant) dans la deuxième étape.